# EUROPEAN PATENT APPLICATION

(11) **EP 1 270 180 A2**
(43) Date of publication of application: **02.01.2003**
(21) Application number: 02013674.3
(22) Date of filing: 19.06.2002
(51) Int. Cl.: B29C 63/34, B29C 57/00

(54) **Device for manufacturing metal pipes with inner plastic linings and terminal flanges**

(30) Priority: 19.06.2001 GB 0114945
(71) Applicant: CIMO SA, 1870 Monthey (CH)
(72) Inventor: Rudaz, Johny Compagnie Industrielle de Monthey SA, 1870 Monthey (CH)
(74) Representative: Zumstein, Fritz, Dr.

(57) **Abstract**

The invention relates to an apparatus for providing a metal pipe or tube (1a) with plastics, especially PTFE, lining (1b) with terminal collars that form tight seals, to the use of said apparatus for the manufacture of a metal pipe or tube (1a) with plastics lining (1b) and to a metal pipe or tube obtainable by said manufacture, as well as to a heating matrix (3) and to a heating plate (2) carrying such heating matrix (3), and to a hydraulic spreading device (64,104) for transiently clamping a plastics lining (1b) inside a metal pipe or tube (1a). Said apparatus comprises a displaceable work bench unit (1) carrying a vice for fixing a pipe or tube (1a) to be lined; a heating plate (2) equipped with one or more heating matrices (3) for shaping PTFE collars; a hydraulic system for displacing the work bench unit (1) carrying the vice for fixing the pipe or tube (1a) to be lined; a hydraulic system for wedging in and loosening of a spreading device (64,104) used to fix the lining (1b) in the pipe or tube (1a) during the shaping of the collar; and a cooling plate (4a) with one or more cooling matrices (4).

## Description

### Device

### Summary of the invention

The invention relates to an apparatus for providing metal pipes or tubes with plastics linings, to the use of said apparatus for the manufacture of metal pipes or tubes with plastics linings and to a metal pipe or tube obtainable by said manufacture, as well as to a heating matrix, to a heating plate carrying such heating matrix and to a hydraulic spreading device for transiently clamping a plastic lining inside a metal pipe or tube.

### Background of the invention

Due to lack of resistance against corrosive conditions, e. g. presence of acid, oxidising materials, complex forming materials or the like, it is often not possible to use metal pipes or tubes in chemical or other processes where, on the other hand, their high mechanical and temperature stability would make them useful. One way to overcome the lack of resistance against-corrosion is to provide the metal pipes or tubes with plastics/polymer linings. This, on the other hand, causes a loss in temperature resistance, as most plastics materials have only limited temperature resistance, especially where they are exposed to elevated temperatures for longer periods of time. With standard thermoplastics, like PE, it is rarely possible to expose them to long term temperatures in excess of 60°C, with one notable exception: Polytetrafluoroethene (PTFE) combines excellent resistance against chemicals, high thermal stability (long term stability around about 250°C, with short term peak tolerance up to about 300°C) and resistance against stress cracking and, thus, in principle, would be the ideal plastics material for covering metal pipes or tubes where they are exposed to adverse conditions. On the other hand, PTFE shows a high tendency towards time-dependent deformation (creeping) which makes it difficult to maintain leakproofness at the flange seals of flanged joints of pipes or tubes with PTFE linings, or more general at seals where tubings are connected to each other. Therefore, using processes for lining metal pipes or tubes with PTFE known hitherto is not satisfactory for maintaining the long term resistance of plants, e. g. for chemical synthesis, where interconnected pipes or tubes are to be applied.

It is, thus, a problem to be solved by the present invention to provide novel tubings with plastics, especially PTFE, linings, that do not display the high susceptibility to lack of leakproofness at flanged joints.

### General description of the invention

The invention relates to an apparatus that allows to produce metal pipes or tubes with PTFE linings with a flange face that allows for long term tight flange seals, especially allowing for forming the PTFE in the flange area in such a way that connecting pipes or tubes with the respective PTFE collars leads to tight seals with high creeping resistance. The metal pipes or tubes with PTFE linings with collars obtainable with the apparatus according to the invention further have the advantage that they can be bent as desired without loss of the advantageous flange sealing properties of the collars.

This principle can, of course, also be used with any other plastics that has at least partially thermoplastic properties, but is especially useful with PTFE materials.

### Detailed description of the invention

The invention relates to an apparatus for manufacturing metal pipes or tubes with one or two terminal flanges with PTFE linings, said apparatus comprising
(i) a displaceable work bench unit carrying a vice for fixing a pipe or tube to be lined;
(ii) a heating plate equipped with one or more heating matrices for shaping PTFE collars;
(iii) a hydraulic system for displacing the work bench unit carrying the vice for fixing the pipe or tube to be lined;
(iv) a hydraulic system for wedging in and loosening of a spreading device used to fix the lining in the pipe or tube during the shaping of the collar;
(v) and a cooling plate with one or more cooling matrices.

The invention also relates to the use of an apparatus according to the invention (especially in a method or a process) for manufacturing metal pipes or tubes with PTFE linings and PTFE collars with terminal PTFE collars extending over flange faces terminally attached to the metal pipes or tubes, comprising
a) fixing a metal pipe or tube with a flange face with PTFE lining which protrudes from the end of the pipe or tube with the flange face using a vice for centering the pipe or tube to be lined on a displaceable work bench unit carrying said vice such that the axis of the pipe or tube is essentially parallel to the longitudinal axis of a heating matrix for shaping a PTFE collar;
b) if required, centering the pipe or tube or the heating matrix such that the axis of the end of the pipe or tube with the protruding PTFE is in line with the axis of the heating matrix;
c) wedging the lining in the pipe or tube near the end where the collar is to be formed with a hydraulic spreading device;
d) hydraulically moving the work bench unit carrying the vice with the pipe or tube, stepwise or continuously or both alternately, towards the heating matrix in order to form the PTFE collar;
e) retiring the work bench unit with the vice from the heating matrix;
f) moving the cooling plate with a cooling matrix between the heating matrix and the PTFE collar and advancing the work bench unit with the vice so that the PTFE collar slides onto the cooling matrix to give it its final shape, maintaining the collar there until it is cooled down sufficiently; and
g) removing the cooling plate, and preferably blocking the free collar by means of blocking clamps so that its collar shape is optimised.

If desired, the spreading device is removed and the metal pipe or tube with the PTFE lining and collar can then be removed, treated analogously at the other end to form a collar there as well, and/or the PTFE lined metal pipe or tube can be bent into a desired shape using standard tools.

The invention also relates to a metal pipe or tube with a PTFE lining having a collar obtainable according to the process for manufacturing metal pipes or tubes with PTFE linings according to the invention.

A further embodiment of the invention relates to a heating matrix which is essentially fungiform and has
- an essentially cylindrical basis on the side where the PTFE lining can be sticked to, which, perpendicularly to its longitudinal axis, has a diameter of 80 to 120%, preferably 100 to 120%, of the inner diameter of the PTFE lining to be used, for example a diameter which is 1 to 5 mm larger than said inner diameter; and
- an essentially plate-shaped head that preferably, perpendicularly to the longitudinal axis of the matrix (which, in case a PTFE lining is sticked to it, is also the axis of said lining), at the place with the widest diameter, has a diameter that is the 1- to 6-fold, preferably the 1.5- to 4.5-fold, diameter of the cylindrical basis, the inclination of the outside (that is directed to the side where the PTFE lining can be slipped on) of the plate-shaped head relatively to a plane that is perpendicular to the longitudinal axis of the matrix preferably being one of 22 to 38, more preferably 25 to 35, especially 30, angular degrees;
   said head at its end with lower diameter and said basis being connected via a concavely rounded transition area that smoothly connects the surface of the cylindrical basis and the plate-shaped head, preferably the cross-section having a shape describing the perimeter of a sector (preferably of a 90 - X degrees sector, where X is the angle of the inclination of the outside of the plate-shaped head relatively to a plane that is perpendicular to the longitudinal axis of the matrix, preferably as defined above) of a circle, especially of a circle with a radius of 5 to 50 mm, preferably 10 to 20 mm, more preferably 13 to 17 mm, especially 15 mm;
   and the distal edge (the edge where the lining can be attached to the matrix) of said cylindrical basis having a preferably convexly rounded shape, more preferably the cross-section having a shape describing the perimeter of a quarter sector of a circle with a radius of preferably 2 to 40 mm, especially 4 to 10 mm, most especially 5 mm.
   Preferred is a heating plate that has more than one, especially 3 to 10, preferably 6, such heating matrices of different sizes corresponding to especially 3 to 10, preferably 6, different standard lining diameters attached to it, preferably mounted on a circular perimeter, most preferably at angles relatively to each other that, with reference to the whole circular perimeter, vary between 48 and 72 angular degrees, for example at approximately equal distances relatively to each neighboured heating matrix.

### Figures

All figures are schematical.
Figure 1 shows an apparatus according to the invention:
Figure 1a) is a view from a lateral perspective; Figure 1b) is a front view.
Figure 2 shows a heating plate **2** without heating matrices:
   Figure 2a) is a front view; Figure 2b) is a side view of the front cover; Figure 2c) shows the central fixing and turning unit.
Figure 3 shows a heating matrix **3.**
Figure 4 shows a cooling matrix **4.**
Figure 5 shows a preferred cone (Figure 5a)) and bell (Figure 5b)) system for fixation of a PTFE lining (PTFE hose) at the end before introduction into a metal pipe or tube.
Figure 6 shows a hydraulic spreading device for fixing a PTFE lining in a pipe or tube during the shaping of a collar:
Figure 6a) shows a device **64** for nominal diameters of the PTFE pipe or tube of DN50, DN65, DN80 and DN100; Figure 6c) shows the end connectable to the hydraulic system of a corresponding device **104** for DN25 and DN40; Figure 6b) partially indicates on the left **92** the segmentation of the terminal ends of the housing of the spreading device for DN25, DN40 and DN50 linings and on the right **93** the segmentation of the housing for DN65, DN80 and DN100 linings.
Figure 7 shows a reducing ring **113** useful for introducing a PTFE lining under reduction of its diameter (allowing for especially good contact between lining and metal pipe or tube wall) into a metal pipe or tube.

A description of the preferred meanings of the reference numbers given in the Figures is presented in the Examples.

The general expressions used above and below preferably have the following meanings, which, independently of each other or in combination, can replace the more general expressions with the proviso, that embodiments of the invention using the preferred meanings (each of which can replace a general expression independently of other general expressions) define preferred embodiments:
Metal pipes or tubes to be lined with PTFE linings are especially made of steel, preferably of high-grade steel, especially of stainless (non-corroding) steel which has a chromium share of about 12% or more, preferably of 12 to 30%, such as of ferritic stainless steels that have a chromium share of up to 30% and less than 0.12% of carbon; martensitic stainless steels which for example have 12 to 17% of chromium and a 0.1 to 1% carbon share; austenitic stainless steels that preferably have a 17 to 19% share of chromium, 5 to 12% of nickel, and 0.03 to 0.15% of carbon; age-hardened stainless steels which contain aluminium, niobium or tantalum (for example 0.4 to 1%) and preferably about 17% of chromium, 4 to 7% of nickel and 0.07 to 0.09% of carbon; or stainless duplex steels comprising about half ferritic and half austenitic steels; where in each of the mentioned steel compositions also further alloying ingredients, such as manganum, molybdenum, titanium, niobium or aluminium, may be present. In a preferred embodiment of the invention, the pipes or tubes are made of stainless steel according to alloyed steels of the classes 1.40YY.YY to 1.49YY.YY according to DIN 17007, leaf 2, September 1961, each Y independently of the others representing an integer between 0 and 9, as far as present for a specific subclass. An especially preferred steel is 1.4435 (X5CrNiMo1812). The pipes or tubes have one or two directly attached terminal flanges (of the same material, for example directly forming part of the pipe or tube, e. g. welded to the pipe or tube or as integral part of the pipe or tube) forming flange faces upon which the PTFE collars are fixed as seals if two flanges of two tubes are interconnected (e. g. by screws, clamps or the like).

PTFE is polytetrafluoroethene (also known as Teflon®; as trademark registered for E. I. du Pont de Nemours and Company, USA) which may be present in pure form ("virgin" or "white" PTFE) or may also contain admixtures or fillers that do not interfere with the forming of the PTFE collars, especially carbon (for example up to 30%, preferably 0.01 to 2%, e. g. 1%; "black" PTFE), or less preferably metals, and the like. For the hoses to be used according to the invention, white PTFE or black PTFE with a carbon content of up to 2% are preferred, especially white PTFE. The raw materials for the linings used according to the invention can be bought from various sources, e. g. from E. I. du Pont de Nemours and Company, from Sealjet or other providers, and linings can be prepared from them according to known procedures, e. g. isostatic molding, ram extrusion, paste extrusion, injection molding, and the like, especially by extrusion. It is also possible to buy the hoses to be used as linings from several manufacturers, including Plastic Omnium, Houston , USA (sold e. g. by Plastic Omnium AG, Schönenbuch, Switzerland).

Where PTFE is used in this invention, also any other, especially any other heat resistant and thermoplastic, plastics material is encompassed in a broader aspect of the invention; however, PTFE (in pure form or with admixtures or fillers, as defined in the preceding paragraph) is the preferred material.

The displaceable work bench unit ("work bench unit") carrying the vice for fixing the pipe or tube to be lined is preferably made from cast iron and is equipped with ball bearings LINEAR STAR 8 with integrated lubricators (Amsler & Co AG, Zurich, Switzerland), with preferably chromium-plated guiding rails (preferably two 40 mm h7, obtainable from Intercambio Handels AG, Zurich, Switzerland), a centering vice HWS 150 M (150 mm maximal diameter, Intercambio Handels AG, Zurich, Switzerland) with prismatic jaws and an adjusting drive based on a hydraulic system which allows for the displacement (sliding) of the work bench unit. It preferably has a T-shaped slit guidance.

The heating plate to which the heating matrix or matrices are fixed is preferably made from a metal, especially cast aluminium or an aluminium alloy, preferably with an essentially plane, preferably processed, e. g. polished, surface, and is preferably thermically isolated at its back in order to avoid loss of heat, e. g. by glass wool, and the back may, for example, be made of sheet steel or other metal material, or preferably be part of the support; it contains an electric heating device, preferably a bent, especially spirally wound or serpentine, heating rod, e. g. with serpentine metal, especially steel and/or copper, with metal, e. g. iron, cover, which is preferably (e. g. in the form of a spiral) directly integrated into the metal, especially cast aluminium, to which a front plate of processed metal, especially aluminium or preferably steel, is fixed that carries the heating matrices, with the unheated parts of the heating rod leading out to the branch box (for example model 3W05-00 from Lükon Paul Lüscher Werke AG, Täufelen, Schweiz). Preferably, the temperature is controlled via a semi-conductor based electronic control unit with temperature sensor (e. g. Pt 100) and temperature display and a thermostat (e. g. 50 to 500°C, 3-pol. main power supply). The thermostat with clips and contacts may be contained in a connection box separate and mounted laterally near the heating plate, which is cabled to the heating plate and a control box that includes the electronic temperature control, a semiconductor relay, an overload fuse, clips and sockets. The heating plate, especially only its front plate, is preferably mounted in a rotable fashion, allowing rotation around its central axis and thus the exact locating of the heating matrices.

During formation of PTFE collars, it is preferably held in an arrested position by appropriate arresting means.

The heating matrices for shaping PTFE collars are preferably as described above for the heating matrices as such forming an embodiment of the invention. The heating matrices are preferably made from a metal, preferably steel, especially stainless steel, and may be obtained from the blank by processing on a turning lathe and polishing. The heating matrices, at the side where the tubing is touching them, has a smooth surface, most preferably a polished surface, allowing to avoid fissures and breaking in the PTFE lining.

The heating matrices are fixed permanently or reversibly (e. g. with threaded bolts) to the front plate of the heating plate, preferably at different positions on a ring-like perimeter on the front of the heating plate (this allows easy adjustment of the apparatus to different pipe or tube sizes, as only the front plate of the heating plate needs to be turned).

Preferably, six different sizes of matrices are present, corresponding to six standard sizes of PTFE hoses with the following nominal diameters (DN):
DN25, DN40, DN50, DN65, DN80, DN100.

These are preferably combined with stainless steel pipes or tubes of the following diameters:

| DN | Stainless steel pipe or tube | PTFE hose (min.) | PTFE hose (max.) |
|---|---|---|---|
| | Inner diameter (mm) (US / European norm) | Inner diameter (mm) (US / European norm) | Inner diameter (mm) (US / European norm) |
| 25 | 27.8/29.7 | 27.3/29.2 | 28.5/30.4 |
| 40 | 42.7/44.3 | 42.2/43.8 | 43.2/44.8 |
| 50 | 54.7/56.3 | 54.2/55.7 | 55.1/56.7 |
| 65 | -/71.5 | -/70.8 | -/71.0 |
| 80 | 82.8/84.3 | 82.3/83.6 | 83.1/84.6 |
| 100 | 109.2/109.1 | 108.7/108.5 | 109.4/109.3 |

When heated and during operation, the heating plate preferably is operated at 350 to 425°C, especially at approximately 400°C.

The hydraulic system for displacing the work bench unit with the vice for fixing the pipe or tube to be lined may be of any customary type; an example is based on the ENERPAC BPE-16423 unit (ENERPAC, USA), which is a 1-step hydraulic pump for 700 bar, 3 x 380 V, 1.1 kW, 1390 t/min, 1 l/min, with a 20 I reservoir, allowing for continuous pressure of 560 bar, with electrodistributor BSV-4 or any comparable system, together with the necessary tubing and other equipment. Other components that may be present independently of each other are pressure control, manometers and small flanges.

The hydraulic system for wedging in and loosening of spreading devices is based on a customary hydraulic system, such as ENERPAC BPE-14353 (ENERPAC, USA), which is a 1-step hydraulic pump for 700 bar, 3 x 380 V, 0.75 kW, 1390 t/min, 0.65 l/min, with a 5 I reservoir, allowing for continuous pressure of 560 bar, with 3/3-way electrodistributor.

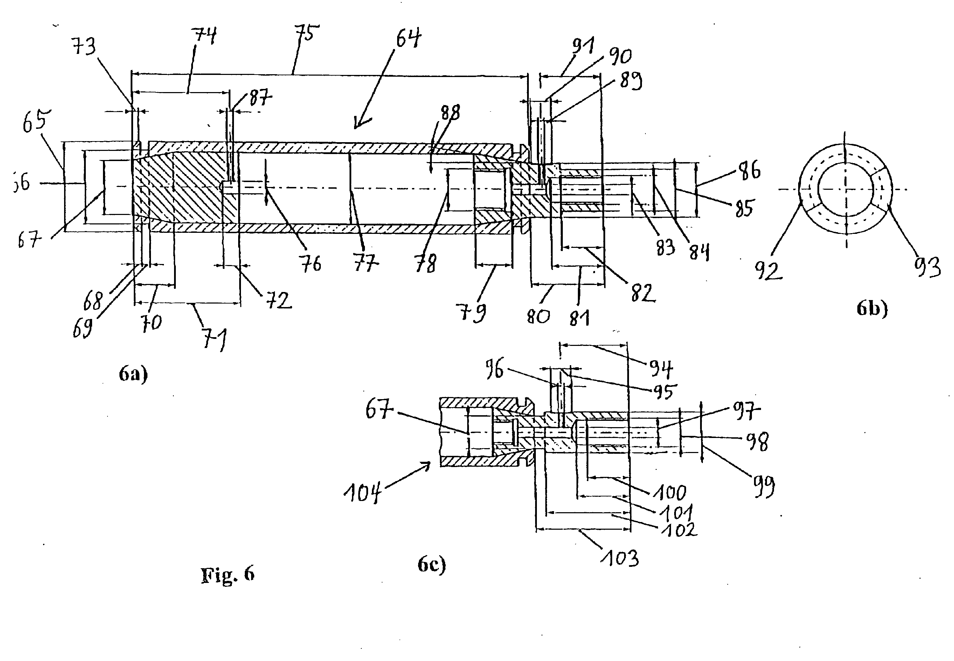

A hydraulic spreading device preferably is an instrument for clamping the PTFE hose in order to prevent it from being displaced inside the metal tubing during the shaping of the collar. The device comprises a cylindrical' hollow housing (of appropriate diameter to loosely fit into the hose; preferred material: metal, e. g. steel) to be placed inside the lining that, at both ends, has an internal diameter that is tapered, diminishing towards the ends and, in the tapering area, is longitudinally segmented, with two tightly fitting, at least partially conical, pistons inside, one of which is axially penetrated by the connection to the hydraulic system and, resting against the inner side, has a central piston which, if hydraulic pressure is administered, is capable to press the opposite conical piston against the other side in direct terminal contact to the central piston, at the same time, due to the counter-pressure stemming from the contact of the terminal end of the central piston, allowing to move the penetrated piston in the opposite direction (the hydraulic piston system can be obtained from various sources, e. g. from ENERPAC, USA), thus allowing to convert the pressure into the moving apart of the conical pistons. Preferably each end has a protruding (ring-like) edge, for example a rim, allowing to place an elastic ring outside the housing in order to keep the segmented ends together. This construction allows that the exterior diameter of the housing is terminally enlarged, if the hydraulic pressure is increased (for example to approximately 300 to 700 bar), and the conical pistons are forced out, pressing the segments of the segmented tapered part of the cylindrical hollow housing radially against the hose and thus pressing it against a surrounding metal pipe or tube. The spreading device is also a separate embodiment of the invention. A preferred version of the spreading device can be seen in Fig. 6.

A cooling plate, preferably carrying one cooling matrix (from metal, especially aluminium) that can be replaced by other cooling matrices of different size, preferably comprises a cooling coil integrated inside a metal, especially aluminium, housing. It is preferably cooled by a liquid cooling medium, especially water directly from the (public or internal) water supply line, preferably with a temperature between 2 and 50°C, more preferably between 5 and 30°C. The cooling plate can be moved, e. g. on a rail or via a lift or a crane with winch, between a heating matrix and the collar of the lining of a pipe or tube to be cooled. The cooling matrices are manually interchangeable, e. g. fixed by reversible fixation means, such as threaded bolts or the like, and are made of metal, especially aluminium.

The cooling matrix preferably has
- an essentially cylindrical basis on the side where the PTFE lining can be sticked to, which, perpendicularly to its longitudinal axis, has a diameter of 90 to 130%, preferably 95 to 125%, of the inner diameter of the PTFE lining to be used; and
- an essentially disk-shaped head that preferably, perpendicularly to the longitudinal axis of the matrix (which, in case a PTFE lining is sticked to it, is also the axis of said lining), has a diameter that is the 1- to 6-fold, preferably the 1.5- to 4.5-fold, diameter of the cylindrical basis, the inclination of the end that is directed to the side where the PTFE lining can be slipped on of the disk-shaped head relatively to the longitudinal axis of the matrix preferably being essentially perpendicular;
   said head and said basis being connected via a concavely rounded transition area that smoothly connects the surface of the cylindrical basis and the disk-shaped head, preferably the cross-section having a shape describing the perimeter of an approximately quarter sector of a circle with a radius of 4 to 30 mm, preferably 5 to 20 mm, more preferably 8 to 12 mm, especially 10 to 10.6 mm;
   and the distal edge (the edge where the lining can be attached to the matrix) of said basis having a preferably convexly rounded shape, more preferably the cross-section having a shape describing the perimeter of a quarter sector of a circle with a radius of preferably 2 to 40 mm, especially 4 to 10 mm, most especially 5 mm.

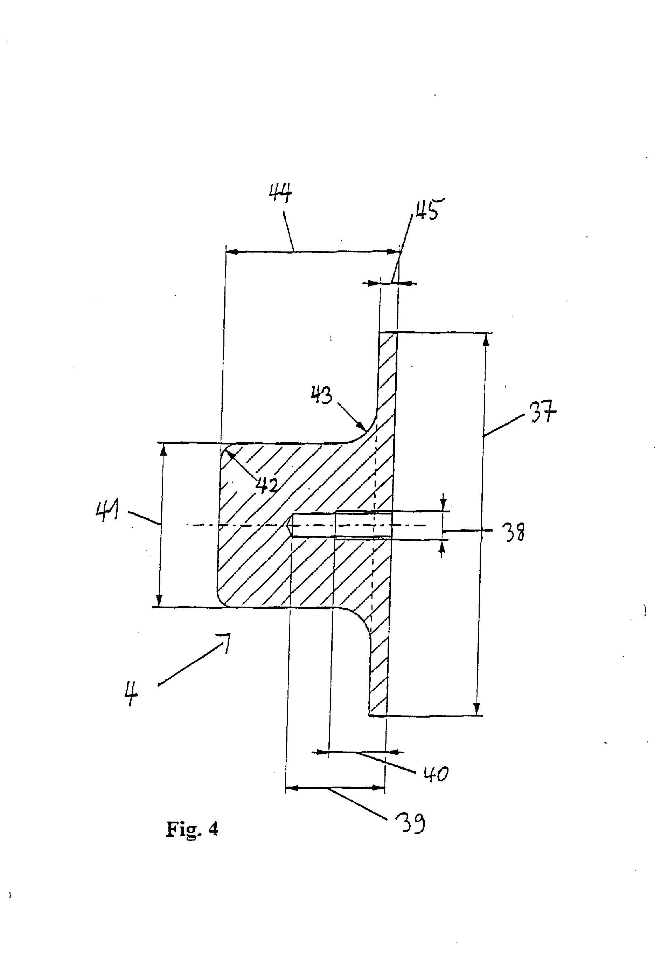

Preferred shapes of the cooling matrix are those represented in Fig. 4 or in analogy thereto.

The apparatus for providing metal pipes or tubes with linings according to the invention is preferably controlled and asssisted by one or more automatic programmable control unit(s), which automatically or after specific programming control(s) all the necessary parameters (e. g. temperature of the heating plate and the like) and functions (e. g. action of the hydraulic systems and the like).

In the use, method or process according to the invention, the fixing of a metal pipe or tube (step a)) preferably takes place in a vice with prismatic jaws.

The step of wedging the lining in the pipe or tube near the end where the collar is to be formed with a hydraulic spreading device (step c)) preferably takes place with a hydraulic spreading device as defined above. Preferably, the PTFE lining projects 30 to 50 mm, more preferably about 40 mm, from an end of the metal pipe or tube with a flange face. The work bench unit, by the hydraulic system described above, is advanced until the PTFE lining touches the radius of the heated heating matrix (which preferably is heated to 350 to 425°C, especially to approximately 400°C). The hydraulic spreading device is introduced from the rear end into the lining until it touches the heating matrix and is then retired preferably by 60 to 100 mm, more preferably by 80 mm, and is then wedged in (blocked) by the hydraulic system for wedging in and loosening of spreading devices described above.

Preferably the rim of the PTFE lining is then left in contact with the heating matrix for a few minutes, preferably for 2 to 15 minutes, more preferably for approximately 5 minutes. This allows the lining to adopt the temperature of the heating matrix.

The step of hydraulically moving the work bench unit carrying the vice with the pipe or tube, stepwise or continuously or both alternately, towards the (heated) heating matrix in order to form the PTFE collar (step d)) preferably takes place by advancing the work bench unit in intervals every one or more minutes, preferably every 1 to 5 minutes, more preferably approximately every 2 minutes, for a few mm, preferably for 2 to 6 mm, especially for approximately 5 mm, until the whole protruding PTFE lining is formed, preferably until the end of the cone of the matrix is reached by the rim of the lining.

After the retiring of the work bench unit with the vice (and the PTFE collar thus formed) from the heating matrix (step e)), the cooling plate is, preferably rapidly, placed between the heating matrix and the PTFE collar thus formed, and, in a preferred version of step f), the work bench unit is (hydraulically) advanced so that the PTFE collar slides onto the cooling matrix until the PTFE collar is placed firmly against the cooling plate and takes up its final shape, the collar being left in place for a certain amount of time until it is cooled down sufficiently, preferably for 2 to 20 minutes, more preferably for approximately 5 minutes.

Finally, in step g) the cooling plate is removed, and, preferably, the free collar is blocked by means of a ring-like (e. g. metal) collar fixed with (e. g. 2) blocking clamps so that its collar shape is optimised and no cleft forms between the PTFE collar and the flange surface of the metal tubing.

During the whole process, the pressure of the spreading device after its wedging in is maintained and preferably monitored.

The spreading device is then preferably removed (after releasing the hydraulic pressure), and the metal pipe or tube with the PTFE lining and collar can be removed, treated analogously at the other end to form a collar there, and/or be bent into a desired shape using standard tools.

Where "approximately" is used, this preferably means that the numerical value characterised by this attribute may vary up to ± 15%, more preferably up to ± 5%, even more preferably up to ± 2%, still more preferably up to ± 1%. Most preferably, the value ± 0% (that is the numerical value itself) is meant.

A preferred embodiment of the use/method/process according to the invention also includes the additional process step (preceding step a)) of first introducing the PTFE lining into the metal pipe or tube. For this purpose, preferably a conical clamping system comprising
(i) a tapered cone ("male piece") that, at its end with wider diameter, has a disk-like end and, at its end with smaller diameter, has a central threaded hole for taking up a threaded bolt, is placed terminally inside the hose (which is preferably fixed to a pipe or tube vice, especially with protectors, such as aluminium protectors), with the end of smaller diameter to the end of the hose; the PTFE hose is preferably terminally trimmed by excision of some (for example, 3 or 4) for example V-shaped pieces (with the open end of the excised V towards the end of the hose) along the length filled by the cone; and
(ii) a bell-shaped cover-piece ("female piece") for housing the cone with the trimmed hose with a central hole which is fixed through said hole with a threaded bolt (which may preferably fixed, e.g. hooked, to a winch cable) (preferably, the angle of the tapering surface of both the cone and the inside of the bell-shaped cover piece relatively to the longitudinal axis of the cone is 5 to 20, especially 8 to 10 angular degrees), thus clamping the trimmed PTFE between the bell-shaped cover-piece and the cone;
   the winch cable, with a terminal junction element, is passed through the total length of the fixed metal pipe or tube (for example fixed to a vice on an appropriate work bench unit) to be lined, for example using a wire or the like; preferably (and, if also on the side where the hosing is introduced from, a flange is present on the metal pipe or tube and a PTFE collar is to be formed there according to the invention, essentially) a distance ring (allowing to have sufficient length of the PTFE hose emerging from the finally lined metal pipe or tube) and, terminally, preferably a reducing ring (allowing to introduce a lining with higher outer diameter than the internal diameter of the metal pipe or tube to be lined, which leads to preferred especially tight fit), especially with an internal conical shape with decreasing diameter towards the end nearer to the metal tubing and with rounded terminal ends, is placed over the winch cable between the metal pipe or tube and the PTFE hose; the winch cable is fixed to the conical clamping system; the metal pipe or tube is preferably cleaned from any deleterious dust by compressed air and fixed with a vice; a lubricant, preferably soft soap or water/soap, glycerol, oil or the like, is put on the hose over its total length; and the winch is carefully put into operation until the hose is partially inserted into the metal pipe or tube, then the winch is put into contiuous operation until the conical clamping system emerges on the other end of the metal pipe or tube; the winch is stopped; and the system is disassembled if desired.

The winch (reversibly or permanently fixed, e. g. to a work bench also carrying the reversibly or mermanently fixed vice holding the metal pipe or tube) preferably has a capacity of 1 to 2 tons, for example 1200 kg, and a winch cable of appropriate strength, e. g. with 8 mm diameter. For example, a 230-V-winch from Pfaff Silberblau, Buchs, Switzerland, e. g. model type 230/84E, may be used. If necessary or desired, the winch cable can be deflected relatively to the winch by means of a guiding pulley.

The "male" and "female" parts of the cone are essentially from metal, especially steel.

The reducing ring preferably is a ring made from metal, especially aluminium, with a longitudinally cone-shaped internal diameter; the one end (to be placed nearer to the metal pipe or tube to be lined) preferably has an inner diameter that is slightly smaller than the outer diameter of the hose, preferably 90 to 99 % of the outer hose diameter (allowing for tight fit of the hose within the metal pipe or tube), while the wider end of the reducing ring preferably has an inner diameter that is larger than the outer diameter of the hose, e. g. 101 to 115 % of the outer diameter of the the hose, and the end with the smaller inner diameter is preferably convexely rounded to provide a smooth, essentially even transition between the inclination of the cone walls and an imaginary or preferably really terminally integrated ringshaped rim with approximately 0 (zero) inclination to the longitudinal axis (this allows sliding of the lining without breaking at sharp edges). The inner side has a smooth, e. g. polished, surface in order to avoid breacking and cracking of the PTFE when the lining is passed through.

### Preferred embodiments of the invention

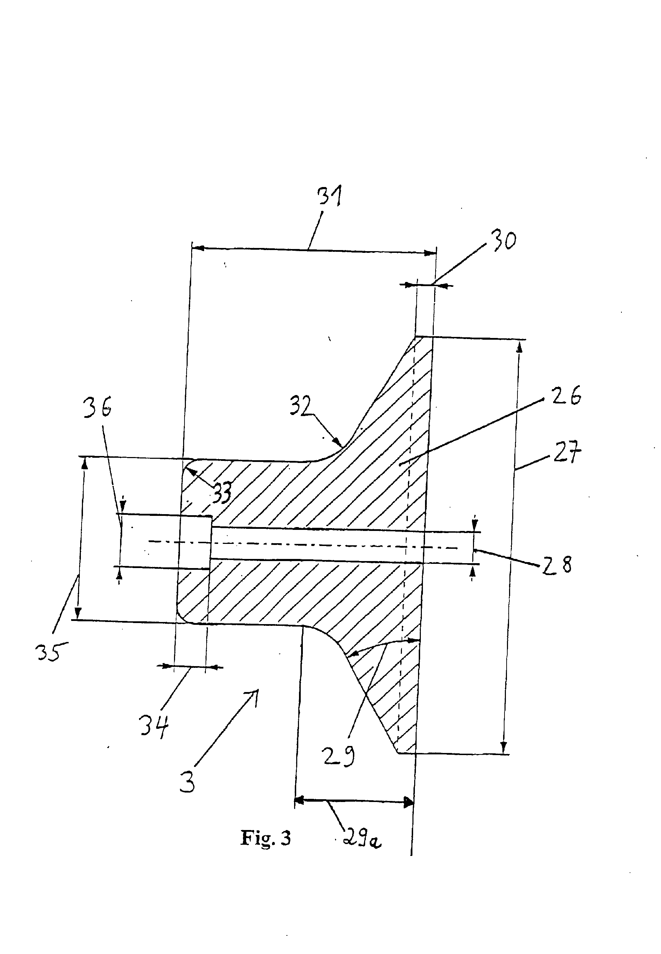

Preferably the heating matrix has a form essentially as shown in Figure 3 (in 1:1 or any different scale), where any of the angles and curvatures shown may vary preferably up to 10%, more preferably only up to3 %, most preferably less than 0.3%.

Very essential to the invention are especially the heating matrices, especially the preferred ones; the cooling matrices, especially the preferred ones; and the heating temperature of 350 to 420°C, especially approximately 400°C when forming the PTFE collars on the heating matrices.

A preferred embodiment of the invention also relates to a heating plate that carries six heating matrices, especially as described hereinabove, of different sizes corresponding to six different standard lining diameters (e. g. DN25, DN40, DN50, DN65, DN80 and DN100), preferably mounted on a circular perimeter.

### Examples

The invention is illustrated by the following examples, which show preferred specific embodiments of the apparatus or equipment according to the invention described more generally above and to be used preferably in the use/method/process according to the invention described more generally above. These examples do not limit the scope of the invention.

### Example 1: Preferred apparatus and equipment for manufacturing a stainless steel pipe or tube with PTFE lining and terminal PTFE collar(s) at its flange face(s)

### Example 1(A):

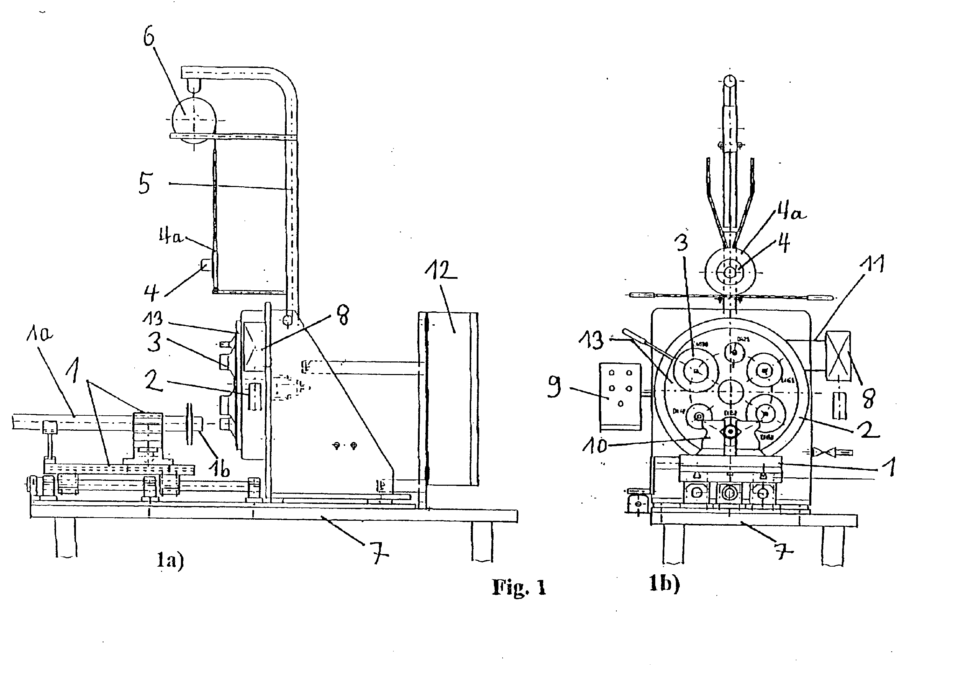

Figures 1a) and 1b) show the essential components of an apparatus according to the invention. A displaceable work bench unit **1** (displaceable by a hydraulic system, not shown in detail) carries a stainless steel pipe or tube **1a** with a stainless steel flange and protruding PTFE lining **1b** held in place by prismatic jaws **10** of a vice. A heating plate **2** of type Lükon 3W05-00 with a processed front plate **13,** to which 6 stainless steel heating matrices, e. g. **3,** for nominal diameters DN25, DN40, DN50, DN65, DN80 and DN100, are fixed (each with a central threaded bolt at the back of each heating matrix), is controlled by a semiconductor-based electronic control unit **8** that is connected to the unheated parts of a heating rod **11.** A stainless steel cooling matrix **4** (with connections to water supply and waste, not shown) on a cooling plate **4a** is mounted displaceably by way of a crane with an arm **5** and a cable winch **6.** The whole apparatus is carried by a work bench **7.** A command box **12** and a control panel **9** allow control of the whole apparatus, including two hydraulic units, a first one for displacement of the work bench unit and a second one for a hydraulic spreading device (not shown, except for the central hydraulic drive in the middle below the displaceable work bench unit). Other standard equipment (such as the work bench **7**; or a frame for inserting the PTFE lining into the stainless steel pipe or tube; or a winch required for that purpose; etc.) is also not shown in detail.

### Example 1(B):

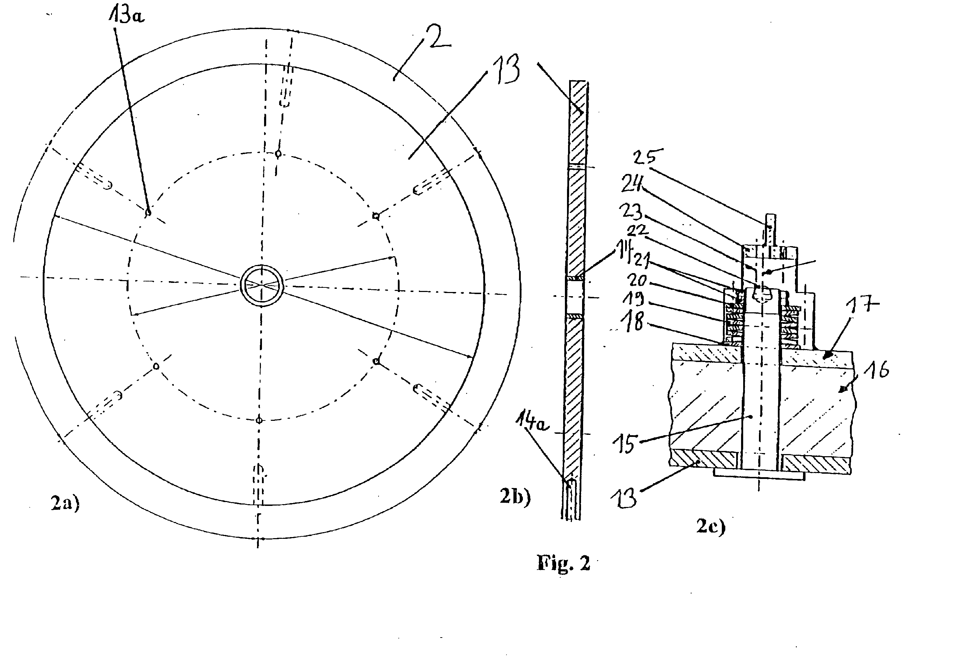

Figures 2a), 2b) and 2c) show details of an example for a heating plate **2** (or **16,** respectively). In Figure 2a), a front view shows a processed aluminium or steel front plate **13** (diameter: 520 mm) with 6 bolts, e. g. **13a,** for 6 heating matrices to be fixed on the perimeter of a circle (diameter: 320 mm). Figure 2b) shows front plate **13** in cross-section. **14** is an indentation at the central hole of front plate **13** for fixation of the front plate. **14a** is a hole for fixing a handle for turning front plate **13.** Figure 2c) shows the central fixing and turning unit in cross-section. Through the central hole in both heating plate **16** and front plate **13,** an axis or shaft **15** is placed, carrying a ring-like extension at the outside of front plate **13** (allowing to fix **13** by pulling it against **16**) and going through the material of heating plate **16** and of a rectangular supporting piece **17** (see also Figure 1a)). On the backside, a ring **18** is fixed, e. g. by welding, to the rectangular supporting piece **17.** A spring element **19,** e. g. from saucer springs, is based on ring **18** and penetrated by axis or shaft **15.** At its backward end, axis or shaft **15** is threaded, and a ring **20,** fixing spring element **19** from the back, is fixed by threaded nuts **21,** so that spring element **19** presses the ring-like extension of axis or shaft **15** (fixing **13**) against front plate **13,** thus fixing the whole heating plate with the front plate and not allowing the heating plate with the front plate to be turned. In order to turn the heating plate with the front plate to allow rotation around axis or shaft **15**, thus allowing to place a different heating matrix in an appropriate position for use, a round ball-like element **22** is fixed axially at the terminal back of axis or shaft **15,** to which a piston (not shown, position indicated by **23)** reaches from the back of a housing **24** with a stabilising element **25.** The piston can be moved by a pump system (not shown) towards ball-like element **22,** which moves axis or shaft **15** against the pressure of spring element **19,** allowing front plate **13** to remove from heating plate **16,** so that **13** can be turned into a new position. Release of the piston allows to fix **13** in the new position.

### Example 1(C):

Figure 3 shows details of an example for a heating matrix **3** with a body **26.** The diameters **27** and **35** are given in the following table, wherein ∅ is the respective diameter (in mm), and DN is the nominal diameter (in mm) of the PTFE hose (with 4 mm wall thickness) used for lining:

| **Reference Number** | DN25 | DN40 | DN50 | DN65 | DN80 | DN100 |
|---|---|---|---|---|---|---|
| **⌀ 27** | 80 | 102 | 117 | 137 | 152 | 178 |
| **⌀ 35** | 20 | 34 | 46 | 61 | 74 | 97 |

⌀ The diameter **28** of a threaded hole for a bolt to fix the heating matrix **3** to the front plate **13** (see Figure 1b)) is 9 mm. The angle **29** is 30°. The distance **29a** is 34 mm. The distance **30** is 5 mm. The length **31** is 70 mm. The concavely rounded area **32** corresponds to the 60°-sector of a circle with 30 mm diameter. The convexly rounded distal edge **33** corresponds to the quarter sector of a circle with 10 mm diameter. The distance **34** is 9 mm. The diameter **36** is 15 mm. The heating matrix **3** consists of, preferably stainless, steel and has a smooth, preferably polished, surface which helps to avoid cracking and breaking of the PTFE if it is passed over **3.**

### Example 1(D):

Figure 4 shows details of an example for a cooling matrix **4.** The diameters **37** and **41** are given in the following table, wherein ⌀ is the respective diameter (in mm), and DN is the nominal diameter (in mm) of the PTFE hose (with 4 mm wall thickness) used for lining; the radius r (in mm) of a circle, the quarter sector of which corresponds to the concavely rounded area **43,** is also given in the following table:

| **Reference Number** | DN25 | DN40 | DN50 | DN65 | DN80 | DN100 |
|---|---|---|---|---|---|---|
| **⌀ 37** | 70 | 92 | 107 | 127 | 142 | 162 |
| **⌀ 41** | 20 | 34 | 46 | 61 | 74 | 97 |
| r **43** | 10 | 10 | 10 | 10.3 | 10.3 | 10.6 |

The diameter **38** corresponds to a threaded hole M8. The distance **39** is 28 mm. The distance **40** is 16 mm. The convexly rounded distal edge **42** corresponds to the quarter sector of a circle with 10 mm diameter. The distance **44** is 50 mm. The distance **45** is 5 mm. The cooling matrix **4** is preferably made from aluminium and has a smooth, preferably polished, surface where the PTFE lining contacts **4.**

### Example 1(E):

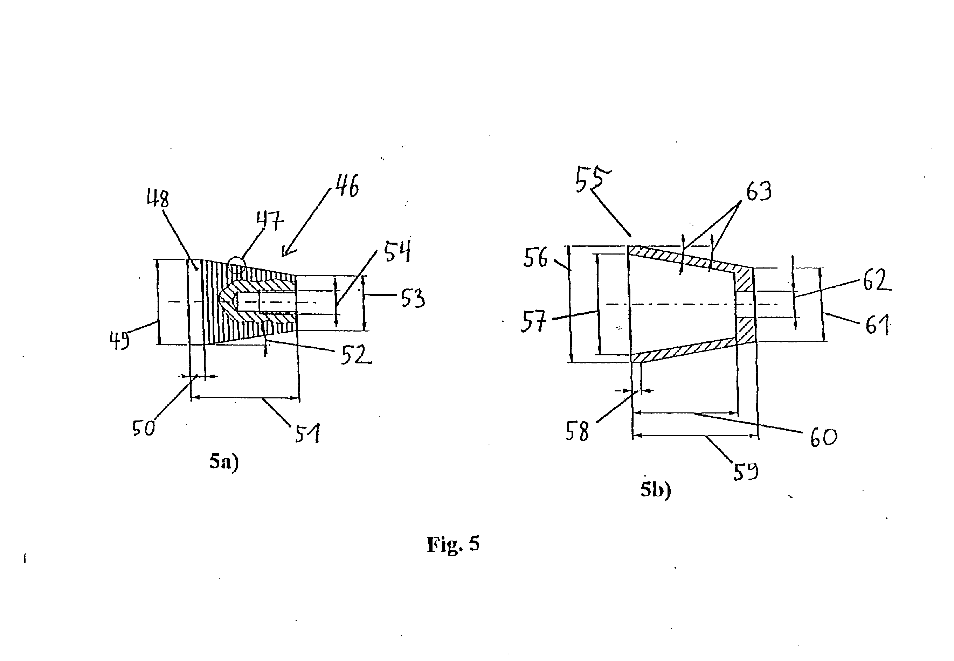

Figure 5a) shows details of an example for a "male" tapered cone **46,** that forms part of a conical clamping system for introducing a PTFE lining into a metal pipe or tube, and Figure 5b) shows details of an example for a corresponding bell-shaped "female" cover-piece **55.** The surface **47** is tapered, while the disk-like end **48** has a surface parallel to the longitudinal axis of cone **46.** The diameters (in mm) **49, 53** and **54,** the distances (in mm) **50** and **51,** and the angle (in °) **52,** all of the "male" part, as well as the diameters (in mm) **56, 57, 61** and **62,** the distances (in mm) **58, 59** and **60,** and the angle (in °) **63,** all of the "female" part, are given in the following table, wherein DN is the nominal diameter (in mm) of the PTFE hose (with 4 mm wall thickness) used for lining, and M8, M10 and M12 are standard bolt sizes:

| **Reference Number** | DN25 | DN40 | DN50 | DN65 | DN80 | DN100 |
|---|---|---|---|---|---|---|
| **49** | 19 | 34 | 36 | 61 | 65 | 85 |
| **53** | 10 | 22 | 23 | 37 | 45 | 60 |
| **54** | M6 | M10 | M10 | M12 | M12 | M12 |
| **50** | 6 | 10 | 6 | 8 | 10 | 10 |
| **51** | 30 | 40 | 44 | 70 | 65 | 75 |
| **52** | 8.5 | 8.5 | 9.7 | 9.7 | 8.7 | 9.5 |
| **56** | 25.5 | 40.5 | 49 | 68 | 80 | 100 |
| **57** | 21 | 34 | 42.5 | 62 | 72.5 | 91 |
| **61** | 12.5 | 25.5 | 31 | 48.5 | 54 | 74.5 |
| **62** | 7 | 11 | 11 | 13 | 13 | 13 |
| **58** | 6 | 10 | 4 | 9 | 7 | 8 |
| **59** | 40 | 50.5 | 52 | 60 | 74.5 | 75 |
| **60** | 20 | 25 | 44 | 56 | 68 | 73 |
| **63** | 8.5 | 8.5 | 9.7 | 9.7 | 8.7 | 9.5 |

### Example 1(F):

Figure 6 shows details of two examples (**64** and **104**) for a hydraulic spreading device used for wedging a PTFE lining inside a stainless steel pipe or tube, **64** to be used for nominal diameters DN50, DN65, DN80 and DN100 (Figure 6a)) and **104** (shown partially) to be used for nominal diameters DN25 and DN40 (Figure 6c)). Figure 6b) indicates (partially) the segmentations of the terminal parts of the housing of a hydraulic spreading device into 3 segments **92** (for nominal diameters DN25, DN40 and DN50) or into 6 segments **93** (for nominal diameters DN65, DN80 and DN100). The diameters (in mm) **65, 66, 67, 76, 77, 78, 83, 84, 85, 86, 87, 89** and **90,** the distances (in mm) **68, 69, 70, 71, 72, 74, 75, 79, 80, 81, 82** and **91,** and the angles (in °) **73** and **88,** all of **64,** as well as the diameters (in mm) **95, 96, 97, 98** and **99,** and the distances (in mm) **94, 100, 101, 102** and **103,** all **of 104,** are given in the following table, wherein DN is the nominal diameter (in mm) of the PTFE hose (with 4 mm wall thickness) used for lining, and M3, M12, M14 and M20 are standard bolt sizes:

| **Reference Number** | DN25 | DN40 | DN50 | DN65 | DN80 | DN100 |
|---|---|---|---|---|---|---|
| **65** | 18.9 | 33.5 | 43.8 | 59 | 72.5 | 93.5 |
| **66** | 14.7 | 25.5 | 35.5 | 51 | 64 | 86 |
| **67** | 10 | 16 | 26 | 34 | 49 | 64 |
| **76*)** | 4.5 | 4.5 | 6 | 6 | 6 | 6 |
| **77** | 15.5 | 24 | 34 | 45 | 60 | 75 |
| **78** | M12 x 1 | M12 x 1 | M20 x 1.5 | M20 x 1.5 | M20 x 1.5 | M20 x 1.5 |
| **83** | 3.5 | 5 | 5 | 5 | 5 | 5 |
| **84** | M14 x 1.5 | M14 x 1.5 | M14 x 1.5 | M14 x 1.5 | M14 x 1.5 | M14 x 1.5 |
| **85** | 19 | 20 | 20 | 25 | 30 | 30 |
| **86** | 10 | 16 | 26 | 34 | 49 | 64 |
| **87** | 3 x M3 | 3 x M3 | 3 x M3 | 3 x M3 | 3 x M3 | 3 x M3 |
| **89** | M3 | M3 | M3 | M3 | M3 | M3 |
| **90** | 10 | 10 | 10 | 10 | 10 | 10 |
| **68** | 2 | 4 | 4 | 4 | 4 | 4 |
| **69** | 2.4 | 4 | 4 | 4 | 4 | 4 |
| **70** | 15 | 20 | 20 | 37.5 | 27.5 | 27.5 |
| **71** | 28 | 54.5 | 52 | 42.5 | 40 | 71.5 |
| **72** | 5 | 5 | 8 | 8 | 8 | 8 |
| **74** | 25.5 | 52 | 48 | 38.5 | 36 | 67.5 |
| **75** | 171 | 184 | 194 | 214 | 214 | 214 |
| **79** | 10 | 10 | 15 | 15 | 15 | 15 |
| **80** | 35 | 35 | 35 | 35 | 35 | 35 |
| **81** | 25 | 25 | 25 | 25 | 25 | 25 |
| **82** | 20 | 20 | 20 | 20 | 20 | 20 |
| **91** | 29 | 29 | 29 | 29 | 29 | 29 |
| **73** | 3 x 45 | 3 x 45 | 3 x 45 | 3 x 45 | 3 x 45 | 3 x 45 |
| **88** | 8.5 | 11.3 | 11.3 | 11.3 | 11.3 | 11.3 |
| **95** | 10 | 10 | 10 | 10 | 10 | 10 |
| **96** | M3 | M3 | M3 | M3 | M3 | M3 |
| **97** | 5 | 5 | 5 | 5 | 5 | 5 |
| **98** | M14 x 1.5 | M14 x 1.5 | M14 x 1.5 | M14 x 1.5 | M14 x 1.5 | M14 x 1.5 |
| **99** | 20 | 20 | 20 | 20 | 20 | 20 |
| **94** | 32 | 32 | 32 | 32 | 32 | 32 |
| **100** | 20 | 20 | 20 | 20 | 20 | 20 |
| **101** | 25 | 25 | 25 | 25 | 25 | 25 |
| **102** | 40 | 40 | 40 | 40 | 40 | 40 |
| **103** | 45 | 45 | 45 | 45 | 45 | 45 |

| | | | | | | |
|---|---|---|---|---|---|---|
| *): Tolerance H7 (norm VSM58410) | | | | | | |

**76** and **78** are diameters of a hydraulic piston (not shown completely). **87** and **89** are holes allowing to introduce bolts for fixing the piston in idle position.

### Example 1(G):

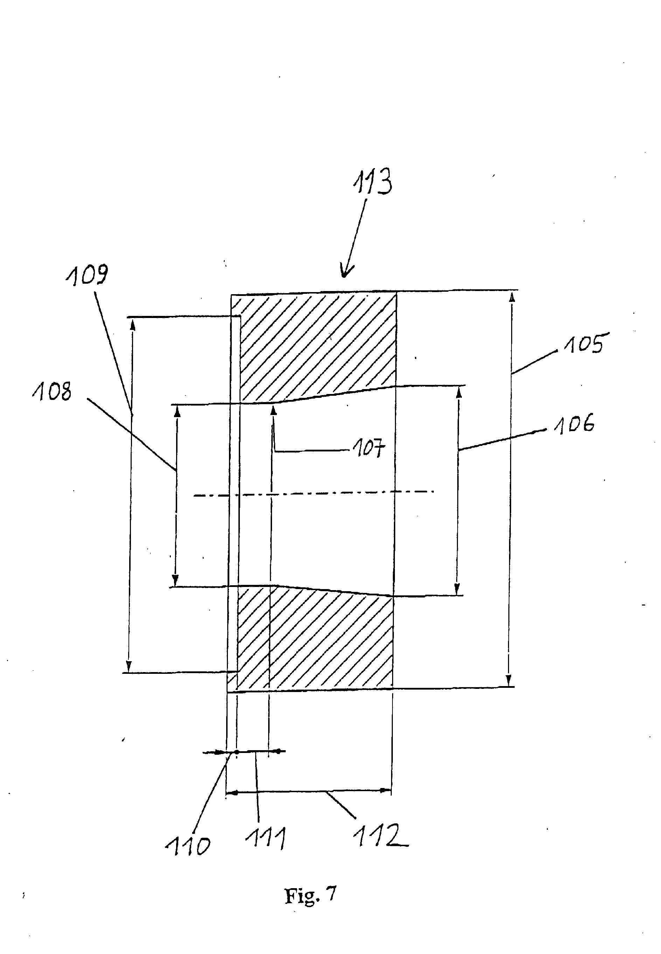

Figure 7 shows details of an example for a reducing ring **113** for slipping a PTFE hose inside a metal, here aluminium, pipe or tube. The diameters (in mm) **105, 106, 108** and **109** and the distances (in mm) **110, 111** and **112** are given in the following table, wherein DN is the nominal diameter (in mm) of the PTFE hose (with 4 mm wall thickness) used for lining:

| **Reference Number** | DN25 | DN40 | DN50 | DN65 | DN80 | DN100 |
|---|---|---|---|---|---|---|
| **105** | 74 | 100 | 115 | 135 | 150 | 168 |
| **106** | 35 | 49.5 | 61 | 75.5 | 89.5 | 112.5 |
| **108** | 29 | 42 | 53 | 70 | 83 | 104 |
| **109** | 67 | 88.5 | 103 | 123 | 139.5 | 152.5 |
| **110** | 8 | 3 | 3 | 8 | 8 | 3 |
| **111** | 15 | 15 | 10 | 15 | 10 | 3 |
| **112** | 50 | 50 | 50 | 50 | 50 | 50 |

The edge **107** is rounded in order to provide a smooth and even transition from the part of the reducing ring with constant inner diameter to the part with tapered (widening) inner diameter, and the inner surface is polished.

### Example 2: Use of apparatus and equipment exemplified in Example 1 for lining a stainless steel pipe or tube with PTFE lining and for forming terminal PTFE collars at its flange faces

Using the apparatus and equipment exemplified in Examples 1(A) to 1(D) and 1(F), the steps a) to g) given above for manufacturing a metal pipe or tube with PTFE lining and PTFE collars over the flange faces terminally attached to the metal pipe or tube are carried out, preferably their preferred versions. Finally, the pipe or tube is removed or bent as desired. For introducing the PTFE lining into the metal pipe or tube according to the invention, preferably, preceding step a), a conical clamping system according to Example 1(E) and a reducing ring according to Example 1(G) are used. The PTFE hose is terminally trimmed by excision of 3 or 4 V-shaped pieces (with the open end of the excised V towards the end of the hose) along the length filled by the cone; is put over the "male piece" of the clamping system; and a bell-shaped cover-piece ("female piece") for housing the cone with the trimmed hose with a central hole is fixed through said hole with a threaded bolt fixable to a winch cable thus clamping the trimmed PTFE between the bell-shaped cover-piece and the cone; the winch cable, with a terminal junction element comprising a bolt for fixing the "male" and "female" parts of the clamping system, is passed through the total length of the fixed stainless steel pipe or tube to be lined, which is fixed by a vice on an appropriate work bench; first a distance ring and then the reducing ring, especially with an internal conical shape and with rounded terminal ends, is placed over the winch cable between the metal pipe or tube and the PTFE hose; the winch cable is fixed to the conical clamping system; the metal tube is cleaned from any deleterious dust by compressed air; as lubricant, preferably soft soap is put on the hose over its total length; and the winch is carefully put into operation until the hose is partially inserted into the metal pipe or tube. Then the winch is put into contiuous operation until the end of the conical clamping system most distant from the connection to the winch cable emerges for more than 40 mm on the other end of the metal pipe or tube; the winch is stopped; and the system is disassembled. The trimmed part of the lining is then cut off to obtain a smooth and even edge that extends about 40 mm out of the stainless steel pipe or tube. The lined pipe or tube is then fixed and the collar formed as described above.

## Claims

1. An apparatus for manufacturing metal tubes with one or two terminal flanges with PTFE linings, said apparatus comprising
(i) a displaceable work bench unit carrying a vice for fixing a tube to be lined;
(ii) a heating plate equipped with one or more heating matrices for shaping PTFE collars;
(iii) a hydraulic system for displacing the work bench unit carrying the vice for fixing the tubes to be lined;
(iv) a hydraulic system for wedging in and loosening of a spreading device used to fix the lining in the tube during the shaping of the collar;
(v) and a cooling plate with one or more cooling matrices.

2. An apparatus according to claim 1, where the heating plate carries six heating matrices for six different PTFE lining sizes, each **characterized in that** it is essentially fungiform and has
an essentially cylindrical basis on the side where the PTFE lining can be sticked to, which, perpendicularly to its longitudinal axis, has a diameter of 80 to 120, preferably 100 to 120 % of the inner diameter of the PTFE lining to be used, especially 1 to 5 mm larger than said inner diameter; and
an essentially plate-shaped head that preferably, perpendicularly to the longitudinal axis of the matrix (which, in case a PTFE lining is sticked to it, is also the axis of said lining), at the place with the widest diameter, has a diameter that is the one- to six-, preferably the 1.5- to 4.5-fold diameter of the cylindrical basis, the inclination of the outside (that is directed to the side where the PTFE lining can be slipped on) of the plate-shaped head relatively to a plane that is perpendicular to the longitudinal axis of the matrix preferably being one of 22 to 38, preferably 25 to 35, especially 30 angular degrees;
said head at its end with lower diameter and said basis are connected via a concavely rounded transition area that smoothly connects the surface of the cylindrical foot and the plate-shaped head, preferably the cross section having a shape describing the circular perimeter of a sector (preferably of a 90 - X degree sector, where X is the angle of the inclination of the outside of the plate-shaped head relatively to a plane that is perpendicular to the longitudinal axis of the matrix, preferably as defined above) of a circle, especially of a circle with a radius of 5 to 50, preferably 10 to 20, more preferably 13 to 17, especially 15 mm;
and the distal edge (the edge where the lining can be attached to the matrix) of said foot has a preferably convexly rounded shape, more preferably with a cross section corresponding to the circular perimeter of a quarter sector of a circle of preferably 2 to 40 mm, especially 4 to 10, most especially 5 mm.

3. An apparatus according to any one of claims 1 and 2 where the displaceable work bench unit is made from cast iron and is equipped with ball bearings with integrated lubricators, has chromium-plated guiding rails, a centering vice with prismatic jaws and an adjusting drive based on a hydraulic system which allows for the displacement (sliding) of the work bench unit;
the heating plate to which the front plate to which the heating matrix or matrices are fixed is made from a metal, especially cast aluminium or an aluminium alloy, the front plate from a metal, especially steel; the heating plate contains an electric heating device, e.g. a spirally wound heating rod, with the unheated parts of the heating device leading out to a branch box, carries six heating matrices of six different sizes, preferably corresponding to PTFE lining sizes with nominal diameter ND25, ND40, ND50, ND65, ND80 and ND100,
and the heating matrices are fixed permanently or reversibly to the heating plate, preferably at different positions on a ring-like perimeter on the front of the heating plate.

4. An apparatus according to any one of claims 1 to 3 wherein the hydraulic system for displacing the work bench unit with the vice for fixing the tube to be is a 1-step hydraulic pump for 700 bar, 3 x 380 V, 1.1 kW, 1390 t/min, 1 l/min, with a 20 I reservoir, allowing for continuous pressure of approximately 560 bar.

5. An apparatus according to any one of claims 1 to 4 wherein the hydraulic system for wedging in and loosening of spreading devices is based on a 1-step hydraulic pump for 700 bar, 3 x 380 V, 0.75 kW, 1390 t/min, 0.65 l/min, 5 I reservoir, allowing for a continuous pressure of approximately 560 bar.

6. An apparatus according to any one of claims 1 to 5 wherein the spreading device used to fix the lining in the tube during the shaping of the collar comprises a cylindrical hollow housing to be placed inside the lining that, at both ends, has an internal diameter that is tapered, diminishing towards the ends and, in the tapering area, is longitudinally segmented,
with two tightly fitting at least partially conical pistons inside, one of which is axially penetrated by the connection to the hydraulic system and, resting against the inner side, has a central piston which, if hydraulic pressure is administered, is capable to press the opposite conical piston against the other side in direct terminal contact to the central piston, at the same time, due to the counter-pressure stemming from the contact of the terminal end of the central piston, allowing to move the penetrated piston in the opposite direction;and preferably each end of the housing thus allowing to convert the pressure into the moving apart of the conical pistons; thus allowing that the exterior diameter of the housing is terminally enlarged if the hydraulic pressure is increased and the conical pistons are forced out, pressing the segments of the segmented tapered part of the cylindrical hollow housing radially against the hose and thus pressing it against a surrounding metal tube.

7. An apparatus according to any one of claims 1 to 6 where the cooling plate is a plate carrying a cooling matrix that can be replaced by other cooling matrices of different size, said cooling plate comprising a cooling coil integrated inside a metal, especially aluminium, housing, preferably connected to a supply of a liquid cooling medium, especially water, preferably from the public or internal water supply line, preferably with a temperature between 2 to 40 ° C, more preferably 10 to 30 °C, said matrix can be moved between a heating matrix and the collar of the lining of a tube to be cooled, and the cooling matrix has an essentially cylindrical basis on the side where the PTFE lining can be sticked to, which, perpendicularly to its longitudinal axis, has a diameter of 90 to 130, preferably 95 to 125 % of the inner diameter of the PTFE lining to be used; and an essentially disk-shaped head that preferably, perpendicularly to the longitudinal axis of the matrix, has a diameter that is the one- to six-, preferably the 1.5- to 4.5-fold diameter of the cylindrical basis, the inclination of the end that is directed to the side where the PTFE lining can be slipped on of the disk-shaped head relatively to the longitudinal axis of the matrix being essentially perpendicular; said head and said basis are connected via a concavely rounded transition area that smoothly connects the surface of the cylindrical foot and the plate-shaped head, preferably the cross section having a shape describing the perimeter of an approximately quarter sector of a circle with a radius of 4 to 30, preferably 5 to 20, more preferably 8 to 12, especially 10 to 10.6 mm; and the distal edge (the edge where the lining can be attached to the matrix) of said foot has a preferably convexly rounded shape, more preferably with a cross section corresponding to the circular perimeter of a quarter sector of a circle of preferably 2 to 40 mm, especially 4 to 10, most especially 5 mm.

8. The use of an apparatus according any one of claims 1 to 7 for manufacturing metal tubes with PTFE linings and terminal PTFE collars extending over the flange faces terminally attached to the metal tubes, comprising
a) fixing a metal tube with a flange face with PTFE lining which protrudes from the end of the tube with the flange face using a vice for centering the tubes to be lined on the displaceable work bench unit according to any one of claims 1 and 3 carrying said vice such that the axis of the tube is essentially parallel to the longitudinal axis of a heating matrix for shaping a PTFE collar;
b) if required centering the tube or the heating matrix such that the axis of the end of the tube with the protruding PTFE is in line with the axis of the heating matrix;
c) wedging the lining in the tube near the end where the collar is to be formed with a hydraulic spreading device according to any one of claims 1 and 6;
d) hydraulically moving the work bench unit carrying the vice with the tube stepwise and/or continuously towards the heating matrix in order to form the PTFE collar;
e) retiring the work bench bench unit with the vice from the heating matrix;
f) moving the cooling plate with a cooling matrix between the heating matrix and the PTFE collar and advancing the work bench unit with the vice so that the PTFE collar slides onto the cooling matrix to give it its final shape, maintaining the collar there until it is cooled down sufficiently; and
g) removing the cooling plate, and preferably blocking the free collar by means of blocking clamps so that its collar shape is optimised;
and, if desired, remowing the spreading device, removing the the metal tube with the PTFE lining and collar, treating it analogously at the other end to form a collar there as well, and/or bending the PTFE lined metal tube into a desired shape.

9. A process according to claim 8, wherein the metal tube used is made of high-grade steel, preferably of stainless steel, and the PTFE is polytetrafluoroethylene which may be present in pure form or may in addition contain admixtures or fillers, especially carbon.

10. A process according to any one of claims 8 and 9, wherein
- the fixing of a metal tube in step a) preferably takes place in a vice with prismatic jaws;
- the wedging the lining in the tube near the end where the collar is to be formed with a hydraulic spreading device (step c)) takes place with a hydraulic spreading device as defined in claim 1 or claim 6;
- the PTFE lining projects 30 to 50, more preferably about 40 mm from an end of the metal tube with a flange face;
- the work bench unit, by the hydraulic system described in claim 1 or 4, is advanced until the PTFE lining touches the radius of the heated heating matrix which is heated to 350 to 425 °C, especially to approximately 400 °C;
- the hydraulic spreading device is introduced from the rear end into the lining until it touches the heating matrix and is then retired preferably by 60 to 100 mm, preferably by 80 mm, and is then wedged in (blocked) by the hydraulic system for wedging in and loosening of spreading devices described in'claim 1 or claim 6;
- preferably, then the rim of the PTFE lining is left in contact with the heating matrix for a few minutes, preferably 2 to 15 min, more preferably approximately 5 minin order to allow the lining to adopt the temperature of the heating matrix;
- the hydraulic moving of the (work) bench unit carrying the vice with the tube in stepwise and/or continuous manner towards the (heated) heating matrix in order to form the PTFE collar (step d)) then preferably takes place by advancing the work bench unit in intervals every one or more minutes, preferably every 1 to 5 min, more preferably approximately every 2 min, for a few mm, preferably until the end of the cone of the matrix is reached by the rim of the lining;
- after the retiring of the work bench unit and the PTFE collar (step e)) thus formed from the heating matrix, the cooling plate is (preferably rapidly) placed between the heating matrix an the PTFE collar thus formed, and in step f) the work bench unit is (hydraulically) advanced so that the PTFE collar slides onto the cooling matrix until the PTFE collar is placed firmly against the cooling plate and has taken up its final shape, and the collar is left in place for a certain amount of time until the until it is cooled down sufficiently, preferably 2 to 20 min, more preferably approximately 5 min; and
- finally, in step g) after removing the cooling plate, the free collar is blocked by means of a ring-like collar fixed with blocking clamps so that its collar shape is optimised and no cleft forms between the PTFE collar and the flange surface of the metal tubing;
- and, if desired, the spreading device is then removed and the metal tube with the PTFE lining and collar is, treated analogously at the other end to form a collar there, and/or it is bent into a desired shape.

11. A process according to any one of claims 8 to 10, including the the additional process step preceding step a) of first introducing the PTFE linings into the metal tubes, preferably comprising using a conical clamping system comprising
(i) a tapered cone that, at its end with wider diameter, has a disk-like end and, at its end with smaller diameter, has a central threaded hole for taking up a threaded bolt, is placed terminally inside the hose (which is preferably fixed to a tube vice, especially with protectors, such as aluminium protectors), with the end of smaller diameter to the end of the hose; the PTFE hose is preferably terminally trimmed by excision of some (for example, 3 or 4) for example V-shaped pieces along the length filled by the cone; and
(iii) a bell-shaped cover-piece for housing the cone with the trimmed hose with a central hole which is fixed through said hole with a threaded bolt (which may preferably fixed, e.g. hooked, to a winch cable) (preferably, the angle of the tapering surface of both the cone and the inside of the bell-shaped cover piece relatively to the longitudinal axis of the cone is 5 to 20, especially 8 to 10 angular degrees), thus clamping the trimmed PTFE between the bell-shaped cover-piece and the cone;
the winch cable, with a terminal junction element, is passed through the total length of the fixed metal tube (for example fixed to a vice on an appropriate work bench unit) to be lined, for example using a wire or the like; preferably - and, if also on the side where the hosing is introduced from, a flange is present on the metal tube and a PTFE collar is to be formed there according to the invention, essentially - a distance ring and, terminally, preferably a reducing ring, especially with an internal conical shape with decreasing diameter towards the end nearer to the metal tubing and with rounded terminal ends, is placed over the winch cable between the metal tube and the PTFE hose; the winch cable is fixed to the conical clamping system; the metal tube is preferably cleaned from any deleterious dust by compressed air and fixed with a vice; a lubricant, preferably soft soap or water/soap, glycerol, oil or the like, is put on the hose over its total length; and the winch is carefully put into operation until the hose is partially inserted into the metal tube, then the winch is put into contiuous operation until the conical clamping system emerges on the other end of the metal tube; the winch is stopped; and the system is disassembled.

12. A metal tube with a PTFE lining having a collar obtainable according to the process described in any one of claims 8 to 11.

13. A metal tube according to claim 12 with a PTFE lining having a collar obtainable according to the process described in any one of claims 8 to 11, said metal being high-grade, especially stainless steel.

14. A metal tube according to any one of claims 12 and 13, where the metal tube has one or two directly attached flanges.

15. A heating matrix which is essentially fungiform and has
an essentially cylindrical basis on the side where the PTFE lining can be sticked to, which, perpendicularly to its longitudinal axis, has a diameter of 80 to 120, preferably 100 to 120 % of the inner diameter of the PTFE lining to be used, especially 1 to 5 mm larger than said inner diameter; and
an essentially plate-shaped head that preferably, perpendicularly to the longitudinal axis of the matrix, at the place with the widest diameter, has a diameter that is the one- to six-, preferably the 1.5- to 4.5-fold diameter of the cylindrical basis, the inclination of the outside of the plate-shaped head relatively to a plane that is perpendicular to the longitudinal axis of the matrix preferably being one of 10 to 50, preferably 25 to 35, especially 30 angular degrees;
said head at its end with lower diameter and said basis are connected via a concavely rounded transition area that smoothly connects the surface of the cylindrical foot and the plate-shaped head, preferably the cross section having a shape describing the circular perimeter of a sector (preferably of a 90 - X degree sector, where X is the angle of the inclination of the outside of the plate-shaped head relatively to a plane that is perpendicular to the longitudinal axis of the matrix, preferably as defined above) of a circle, especially of a circle with a radius of 5 to 50, preferably 10 to 20, more preferably 13 to 17, especially 15 mm;
and the distal edge (the edge where the lining can be attached to the matrix) of said foot has a preferably convexly rounded shape, more preferably with a cross section corresponding to the circular perimeter of a quarter sector of a circle of preferably 2 to 40 mm, especially 4 to 10, most especially 5 mm.
